# EUROPEAN PATENT SPECIFICATION

(11) **EP 4 318 073 B1**
(45) Date of publication and mention of the grant of the patent: **11.11.2026**
(21) Application number: 22779734.7
(22) Date of filing: 28.02.2022
(51) Int. Cl.: G02B 21/34, G02B 21/00

(54) **SLIDE HOLDER AND SLIDE-HOLDER SUPPORT STRUCTURE**
GLEITHALTER UND GLEITHALTERSTÜTZSTRUKTUR
PORTE-LAME ET STRUCTURE DE SUPPORT DE PORTE-LAME

(30) Priority: 02.04.2021 JP 2021063365
(43) Date of publication of application: 07.02.2024
(73) Proprietor: K.K. Cybo, Tokyo 135-0064 (JP)
(72) Inventor: NITTA, Nao, Tokyo 135-0064 (JP); SUGIMURA, Takeaki, Tokyo 135-0064 (JP); KANEMATSU, Miki, Tokyo 135-0064 (JP)
(74) Representative: Global IP Europe Patentanwaltskanzlei
(86) International application number: PCT/JP2022/008156
(87) International publication number: WO 2022/209509

(56) References cited:
- CN-U- 210 514 779
- JP-A- 2005 128 378
- JP-A- H06 347 702
- JP-U- H0 596 818
- US-A- 6 118 582
- US-A1- 2007 153 369

## Description

### FIELD

The present invention relates to slide holders for capturing, with a microscope, images of glass slides onto which a subject object such as cells has been applied, and to a slide-holder support structure.

### BACKGROUND

There are conventionally known metallic slide holders that hold glass slides on which a subject object has been applied (e.g. Japanese Unexamined Patent Application Publication No. 2020-504328). US 2007/153369 A1 relates to a microscope table having a recess to receive an object-holder means, wherein the recess is dimensioned in such a way that it is suitable for receiving a standard microtiterplate. US 2007/153369 A1 discloses the preamble of claim 1.

### BRIEF SUMMARY

### TECHNICAL PROBLEM

The conventional metallic slide holders are not designed on the assumption that they are used in a state where many slide holders are stacked one on another. Accordingly, when images of glass slides are captured with a microscope, the number of slide holders that can be mounted inside an apparatus is limited. In addition, since slide holders themselves are expensive, it is not realistic to store the slide holders for a long period in a state where glass slides are attached to those slide holders, and glass slides need to be attached every time measurement is performed.

An object of the present invention is to provide stackable slide holders, and a slide-holder support structure on which the slide holders can be placed.

### SOLUTION TO PROBLEM

A first aspect of the present invention is a slide holder that can hold a plurality of glass slides, the slide holder including:
a first longer side portion that has elastic portions that fix the glass slides, and has a tapered surface on an inner periphery side of a bottom surface;
a second longer side portion that is positioned opposite the first longer side portion; and
a first shorter side portion and a second shorter side portion that connect ends of the first longer side portion and the second longer side portion, and are positioned opposite to each other.

Each of the first longer side portion, the second longer side portion, the first shorter side portion and the second shorter side portion has:
a pedestal portion that has a downwardly extending wall portion at a bottom surface; and
a protrusion that protrudes upward from the pedestal portion, and is positioned on an inner periphery side of the wall portion.

### ADVANTAGEOUS EFFECTS

The present invention can provide stackable slide holders, and a slide-holder support structure on which the slide holders can be placed.

### BRIEF DESCRIPTION OF DRAWINGS

FIG. 1 is a perspective view of a slide holder according to an embodiment.
FIG. 2 is a perspective cross-sectional view taken along line A-A in FIG. 1.
FIG. 3 is a perspective view of the bottom surface of the slide holder according to the embodiment.
FIG. 4 is a perspective view of the bottom surface of the slide holder according to a modification example.
FIG. 5 is a cross-sectional view of the slide holder holding a glass slide at a time of image capturing.
FIG. 6A is a cross-sectional view of the slide holder according to the embodiment holding a glass slide at a time of image capturing, and FIG. 6B is a cross-sectional view of a slide holder according to a comparative example holding a glass slide at a time of image capturing.
FIG. 7 is a cross-sectional view taken along line B-B in FIG. 1 in a state where a plurality of slide holders according to the modification example are stacked one on another.
FIG. 8 is a cross-sectional view taken along line C-C in FIG. 1 in a state where a plurality of slide holders according to the modification example are stacked one on another.
FIG. 9 is a perspective view of a stage on which the slide holder is placed.
FIG. 10 is a cross sectional view taken along line A-A in FIG. 9.
FIG. 11 is a schematic configuration diagram of a microscope system.

### DETAILED DESCRIPTION

### Embodiment

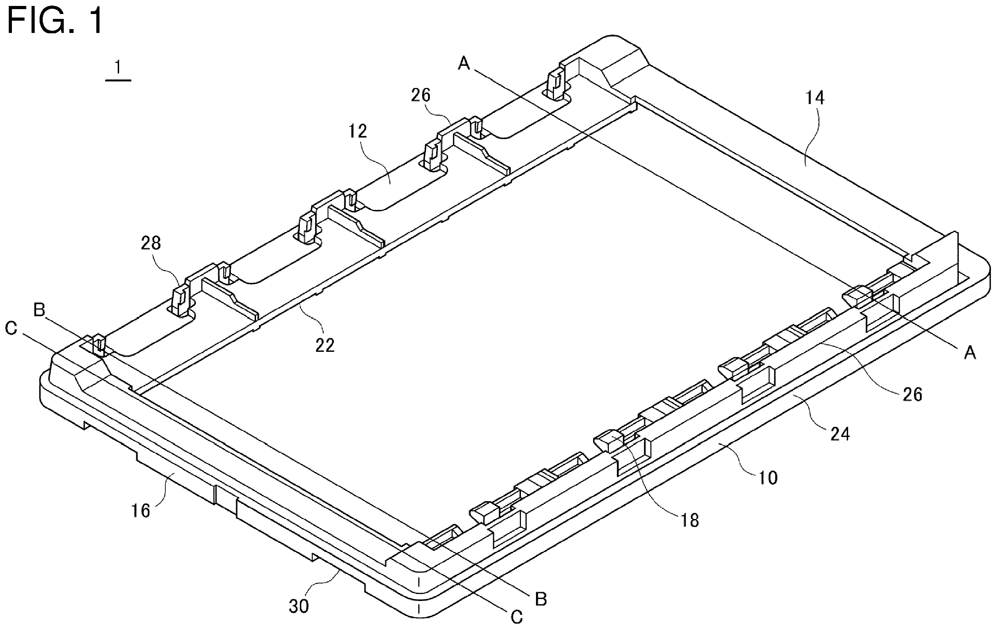

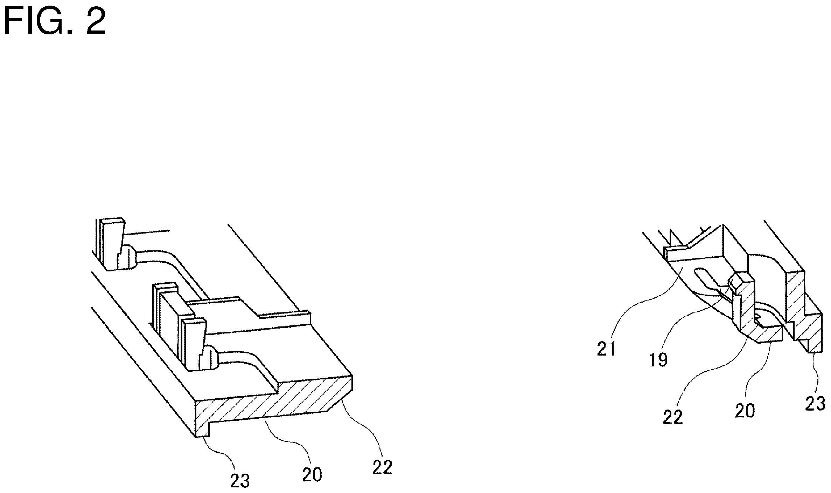

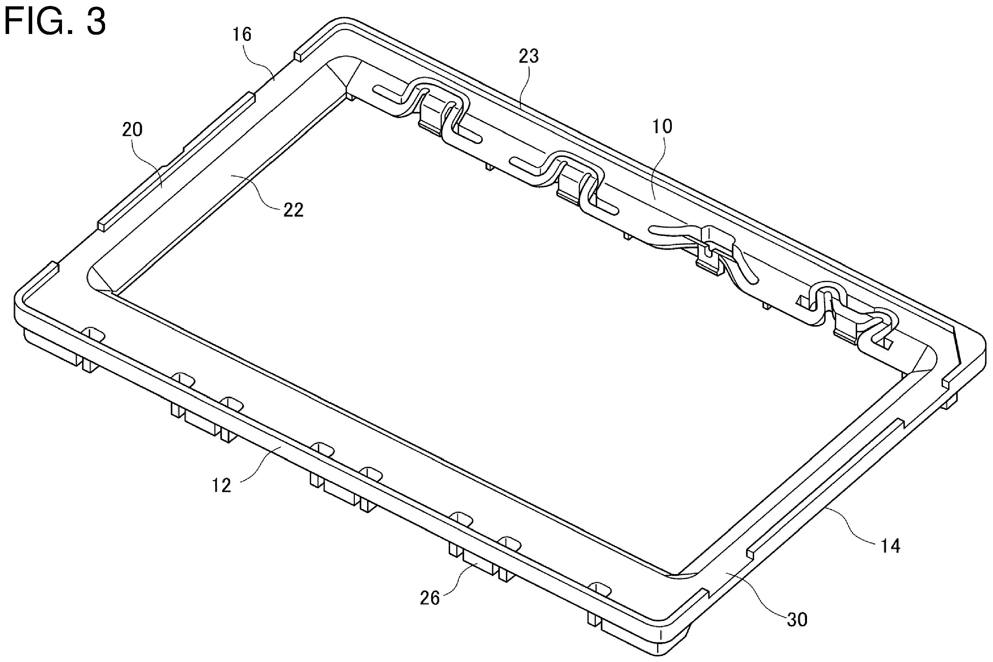

Hereinbelow, a slide holder 1 according to an embodiment is explained. FIG. 1 is a perspective view of the slide holder 1 according to the embodiment. FIG. 2 is a perspective cross-sectional view taken along line A-A in FIG. 1. FIG. 3 is a perspective view of the bottom surface of the slide holder 1 according to the embodiment. The slide holder 1 according to the embodiment can hold a plurality of glass slides 2 (e.g. four slide glasses 2).

As depicted in FIG. 1 to FIG. 3, the slide holder 1 has a first longer side portion 10, a second longer side portion 12, a first shorter side portion 14 and a second shorter side portion 16. The first longer side portion 10 has elastic portions 18 that fix the glass slides 2. The first longer side portion 10 according to the present embodiment has a plurality of the elastic portions 18 (e.g. four elastic portions 18). For example, the elastic portions 18 are structures whose portions for fixing the glass slides 2 are elastically deformed and can move due to springs upon receiving external force, and bias the glass slides 2 along a direction from the first longer side portion 10 to the second longer side portion 12.

The second longer side portion 12 is positioned opposite the first longer side portion 10. The first shorter side portion 14 connects ends of the first longer side portion 10 and second longer side portion. The second shorter side portion 16 connects the other ends of the first longer side portion 10 and second longer side portion. The first shorter side portion 14 and the second shorter side portion 16 are positioned opposite to each other.

The first longer side portion 10, the second longer side portion 12, the first shorter side portion 14 and the second shorter side portion 16 are formed integrally. Thereby, the frame-shaped slide holder 1 is formed. The first longer side portion 10, the second longer side portion 12, the first shorter side portion 14 and the second shorter side portion 16 include resin (ABS resin, polypropylene, polycarbonate, polyphthalamide, polyoxymethylene, polymethylmethacrylate, polybutylene terephthalate, etc.). The first longer side portion 10, the second longer side portion 12, the first shorter side portion 14 and the second shorter side portion 16 are injection-molded. At this time, the resin thickness of the entire frame-shaped slide holder 1 is preferably uniform.

The second longer side portion 12 has claws 28 that receive the glass slides 2. The second longer side portion 12 according to the present embodiment has a plurality of the claws 28 (e.g. eight claws 28). The claws 28 receive the glass slides 2 biased by the elastic portions 18. By pressing the glass slides 2 in under the claws 28, and causing the elastic portions 18 to press the glass slides 2 against the claws 28, the glass slides 2 are held by the slide holder 1. In the present embodiment, two (a pair of) claws 28 correspond to one elastic portion 18.

The first longer side portion 10 has a tapered surface 22 at the inner periphery side of a bottom surface 20. Preferably, each of the first longer side portion 10, the second longer side portion 12, the first shorter side portion 14 and the second shorter side portion 16 has the tapered surface 22 on the inner periphery side of the bottom surface 20. The angles formed by the respective bottom surfaces 20 and tapered surfaces 22 in the first longer side portion 10, the second longer side portion 12, the first shorter side portion 14 and the second shorter side portion 16 are preferably the same. The angles formed by the respective bottom surfaces 20 and tapered surfaces 22 are preferably equal to or smaller than 60 degrees.

The first longer side portion 10 holds the glass slides 2 by pressing the glass slides 2 toward the second longer side portion 12 by using elastic force of the elastic portions 18. In addition, preferably, the first longer side portion 10 has a glass slide placement surface 21 on its upper surface. The glass slide placement surface 21 holds the glass slides 2 such that the glass slides 2 do not fall off downward. In addition, in order to prevent the held glass slides 2 from coming off upward, preferably, projections 19 are formed at the upper portions of the elastic portions 18.

Note that since the sizes of the glass slides 2 vary, preferably, the elastic portions 18 can appropriately hold the glass slides 2 with various sizes. Accordingly, the range of possible displacement amounts in terms of strokes of the elastic portions 18 are preferably greater than the variations of the lengths of the glass slides 2 in the longitudinal-axis direction. For example, in a case where the variations of the sizes of the glass slides 2 are ±0.5 millimeters, the strokes of the elastic portions 18 are preferably equal to or greater than one millimeter.

In order for the elastic portions 18 to have sufficient strokes, for example, the elastic portions 18 can have spring structures overhanging from the glass slide placement surface 21. Since the spring structures can be given sufficient lengths, displacement due to the pliability or twists of the material can be gained, and the strokes of the elastic portions 18 increase.

Note that in a case where the spring structures of the elastic portions 18 are structures overhanging from the glass slide placement surface 21, the glass slide placement surface 21 and the spring structures of the elastic portions 18 preferably overlap the tapered surfaces 22 when seen in a plan view.

In addition, the spring structures twist and are deformed when the glass slides 2 are held. Accordingly, sections interconnecting the first longer side portion 10 and the spring structures are preferably lower than the glass slide placement surface 21. Thereby, even if the interconnecting sections are deformed upward along with twists of the spring structures, and this moves the glass slides 2 upward, interference of the spring structures with the glass slides 2 can be inhibited.

Each of the first longer side portion 10, the second longer side portion 12, the first shorter side portion 14 and the second shorter side portion 16 has a pedestal portion 24 and a protrusion 26. The pedestal portions 24 form the outer frame of the slide holder 1. Each pedestal portion 24 has a wall portion 23 at the bottom surface 20 thereof. The protrusions 26 protrude above the first longer side portion 10, the second longer side portion 12, the first shorter side portion 14 and the second shorter side portion 16. In the frame-shaped slide holder 1, each protrusion 26 has an outline shape smaller than the corresponding wall portion 23.

At least one of the first longer side portion 10, the second longer side portion 12, the first shorter side portion 14 and the second shorter side portion 16 has recesses 30 at its wall portion 23. In the present embodiment, the wall portion 23 of each of the first shorter side portion 14 and the second shorter side portion 16 has two recesses 30. As depicted in FIG. 3, each wall portion 23 preferably has a height at the recesses 30 which is the same as the height of the bottom surface 20.

Note that the number of the recesses 30 is not limited particularly. In addition, the wall portions 23 of the first longer side portion 10 and second longer side portion 12 may have recesses 30 or the wall portions 23 of all of the first longer side portion 10, the second longer side portion 12, the first shorter side portion 14 and the second shorter side portion 16 may have recesses 30.

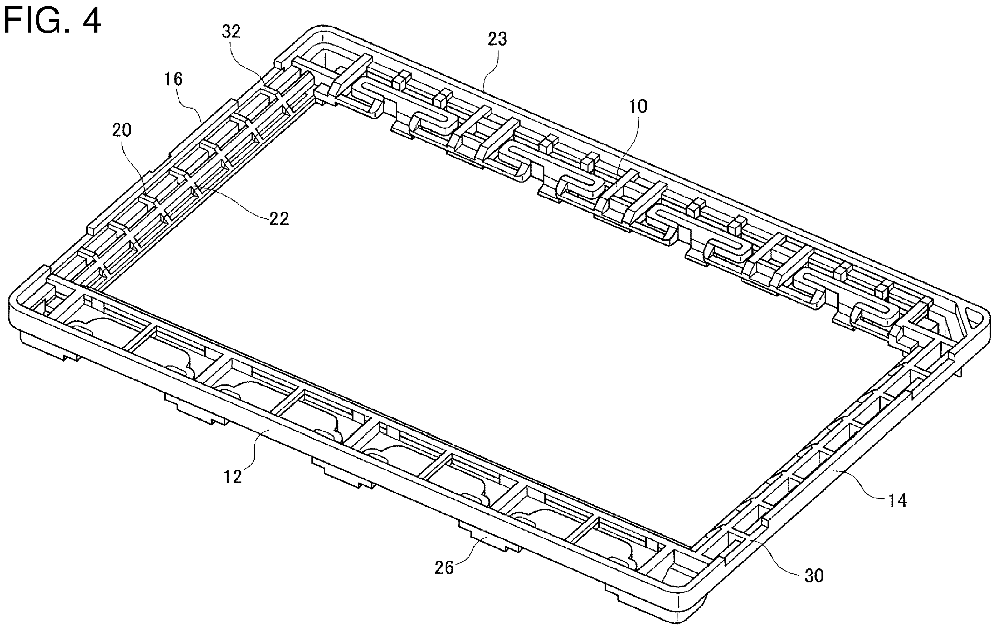

FIG. 4 is a perspective view of the bottom surface of the slide holder 1 according to a modification example. The slide holder 1 according to the modification example depicted in FIG. 4 is the same in terms of basic profile as the slide holder 1 according to the embodiment depicted in FIG. 3, but is different in terms of specific configuration of the bottom surfaces 20 and the tapered surfaces 22. The slide holder 1 according to the modification example has a plurality of ribs 32 at the bottom surfaces 20. Thereby, the strength of the slide holder 1 is enhanced while the thickness of the slide holder 1 is kept thin. In addition, by making the thickness of the resin of the slide holder 1 uniform, the fluidity of the resin at a time of injection molding becomes uniform.

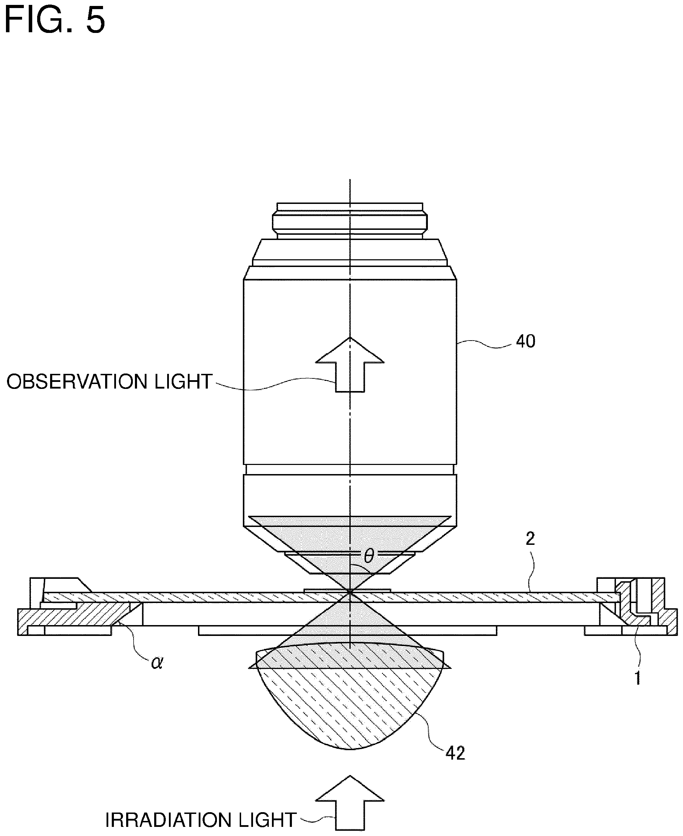

FIG. 5 is a cross-sectional view of the slide holder 1 according to the embodiment holding a glass slide 2 at a time of image capturing. Irradiation light is condensed onto the glass slide 2 held by the slide holder 1 by a transmission illumination system 42, and the light is observed with a dry-type objective lens 40. The transmission illumination system 42 has a condenser lens, for example. Here, a maximum incident angle θ of the light into the objective lens 40 and a numerical aperture NA of the objective lens 40 satisfy a relationship of NA = n×sinθ if the refractive index of a medium between the objective lens 40 and a sample is defined as n. If the wavelength of the light is defined as λ, an optical resolution σ satisfies a relationship of σ = 0.61λ/sinθ. As the value of the optical resolution σ decreases, the observable intricateness of subjects increases. Accordingly, the maximum incident angle θ of the light into the objective lens 40 is preferably increased.

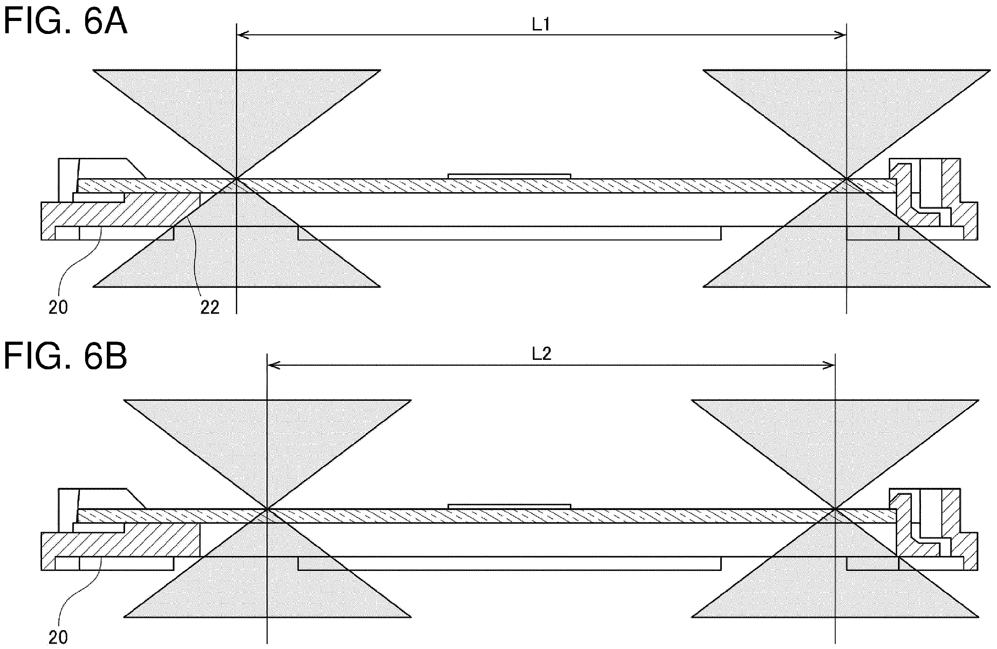

FIG. 6A is a cross-sectional view of the slide holder 1 according to the embodiment holding a glass slide 2 at a time of image capturing. FIG. 6B is a cross-sectional view of the slide holder 1 according to a comparative example holding a glass slide 2 at a time of image capturing. As depicted in FIG. 6A, the slide holder 1 according to the embodiment has the tapered surface 22 on the inner periphery side of the bottom surface 20 of at least the first longer side portion 10. Accordingly, it is possible to inhibit interference of irradiation light radiated onto the glass slide 2 with the inner periphery side of the bottom surface 20 of the slide holder 1. The effective imaging range in FIG. 6A is defined as L1.

In contrast to this, the slide holder 1 according to the comparative example depicted in FIG. 6B is different from the embodiment in that there are no tapered surfaces 22 on the inner periphery side of the bottom surfaces 20. Accordingly, in the slide holder 1 according to the comparative example, it becomes more likely for irradiation light radiated onto the glass slide 2 to interfere with the inner periphery side of the bottom surfaces 20 of the slide holder 1. Accordingly, an effective imaging range L2 according to the comparative example depicted in FIG. 6B is narrower than the effective imaging range L1 according to the embodiment.

In a case where the numerical aperture NA is 0.5, the maximum incident angle θ is 30 degrees. In a case where the numerical aperture NA is 0.6, the maximum incident angle θ is 36.9 degrees. In a case where the numerical aperture NA is 0.7, the maximum incident angle θ is 44.4 degrees. In a case where the numerical aperture NA is 0.8, the maximum incident angle θ is 53.1 degrees.

An angle α formed by the bottom surfaces 20 and the tapered surfaces 22 is (90-θ) degrees. Accordingly, the inclination angle of the tapered surfaces 22 is preferably set taking into consideration the maximum incident angle θ determined by the numerical aperture NA of the objective lens 40 such that the angle α formed by the bottom surfaces 20 and the tapered surfaces 22 becomes equal to or smaller than (90-θ) degrees. The angle α formed by the bottom surfaces 20 and the tapered surfaces 22 is equal to or smaller than 60 degrees, for example.

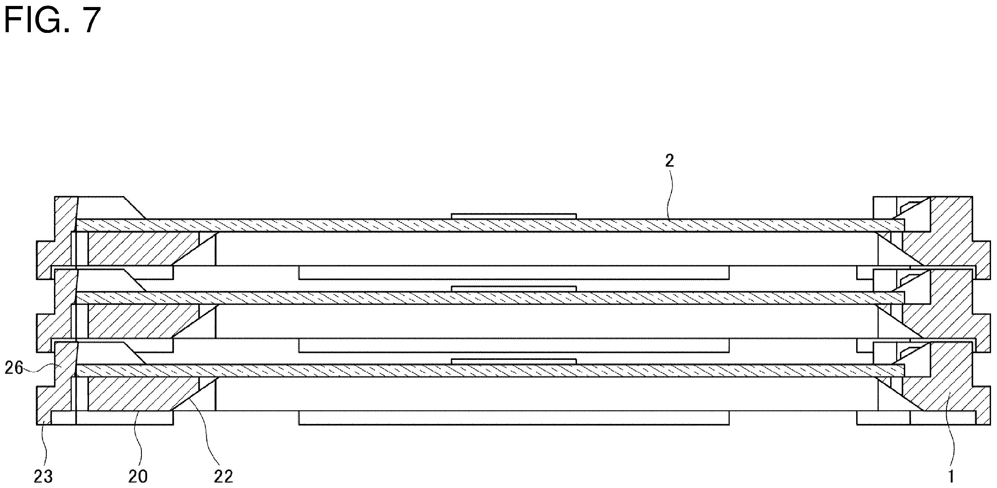

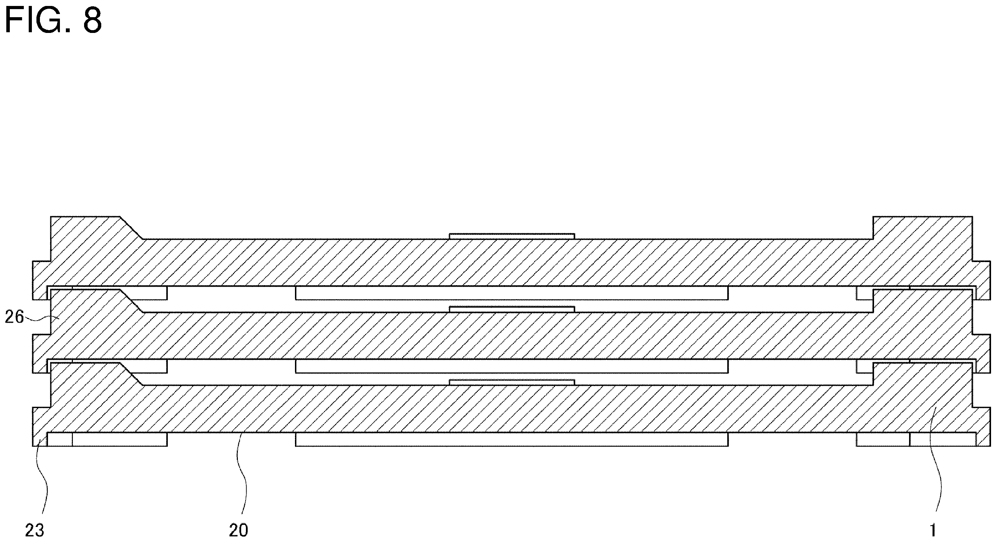

Next, with reference to FIG. 7 and FIG. 8, a state where the slide holders 1 according to the embodiment are stacked one on another is explained. FIG. 7 is a cross-sectional view taken along line B-B in FIG. 1 in a state where a plurality of the slide holders 1 according to the modification example are stacked one on another. FIG. 8 is a cross-sectional view taken along line C-C in FIG. 1 in a state where a plurality of the slide holders 1 according to the modification example are stacked one on another.

As mentioned above, in the frame-shaped slide holder 1, each protrusion 26 has an outline shape smaller than the corresponding wall portion 23. Accordingly, as depicted in FIG. 7 and FIG. 8, the protrusions 26 protruding above the slide holders 1 are positioned on the inner periphery side of the downwardly extending wall portions 23 of the slide holders 1 that are stacked from above. The height of the protrusions 26 is taller than the thickness of the glass slides 2. Thereby, the slide holders 1 holding the glass slides 2 can be stacked one on another.

The length, width and thickness of the glass slides 2 are 76 mm, 26 mm and 0.8 mm to 1.5 mm, respectively, for example. The length, width and height of the outline shape of the slide holders 1 that can hold four of the glass slides 2 that are placed next to each other are 127.76 mm, 85.48 mm and 7.5 mm, respectively, for example. The outline shape of the slide holders 1 may be an outline shape conforming to typical ANSI/SBS standards for 96 well plates and the like, for example.

Note that the size of the slide holders 1 can be changed as appropriate depending on glass slides 2 to be held. In particular, the height of the slide holders 1 can be changed as appropriate as long as glass slides 2 do not stick out above the slide holder 1 in a state where the slide holders 1 hold the glass slides 2. In addition, in a case where large-sized glass slides 2 to be used for pathological section specimens are used, each slide holder 1 may hold two of the large-sized glass slide 2 in a state where they are placed next to each other.

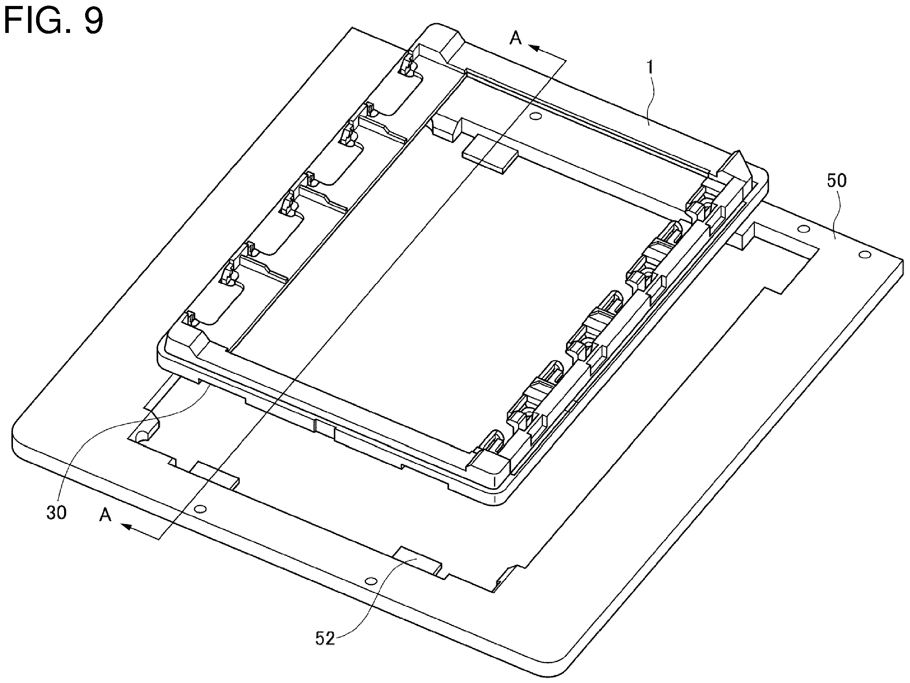

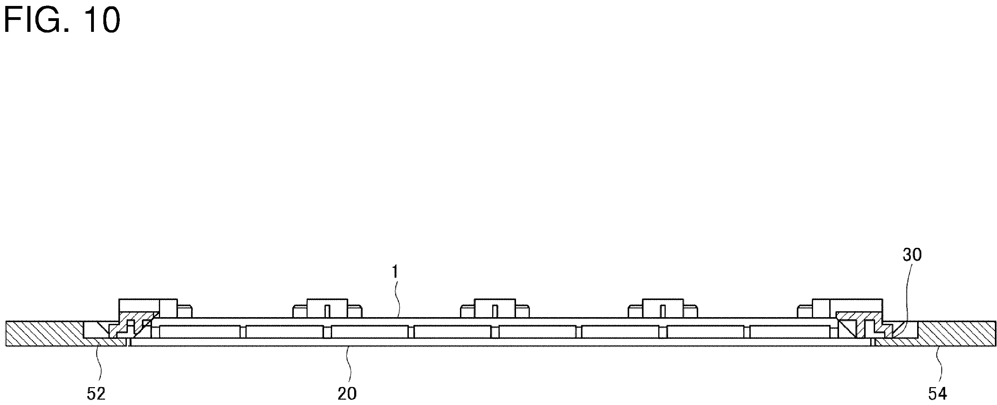

Next, with reference to FIG. 9 and FIG. 10, a stage 50 on which the slide holder 1 according to the embodiment is placed is explained. FIG. 9 is a perspective view of the stage 50 on which the slide holder 1 is placed. FIG. 10 is a cross sectional view taken along line A-A in FIG. 9.

The stage 50 has a frame-shaped outline shape larger than the slide holder 1. The frame-shaped stage 50 has support sections 52 at its inner periphery. The support sections 52 are provided at positions corresponding to the recesses 30 of the slide holder 1. Thereby, the support sections 52 support the slide holder 1 at the recesses 30.

As depicted in FIG. 10, the bottom surfaces 20 of the slide holder 1 and a bottom surface 54 of the stage 50 preferably coincide with each other in a state where the slide holder 1 is placed on the stage 50. Thereby, it is possible to inhibit optical interference of the objective lens 40 or the transmission illumination system 42 with the slide holder 1 or the stage 50 at a time of image capturing.

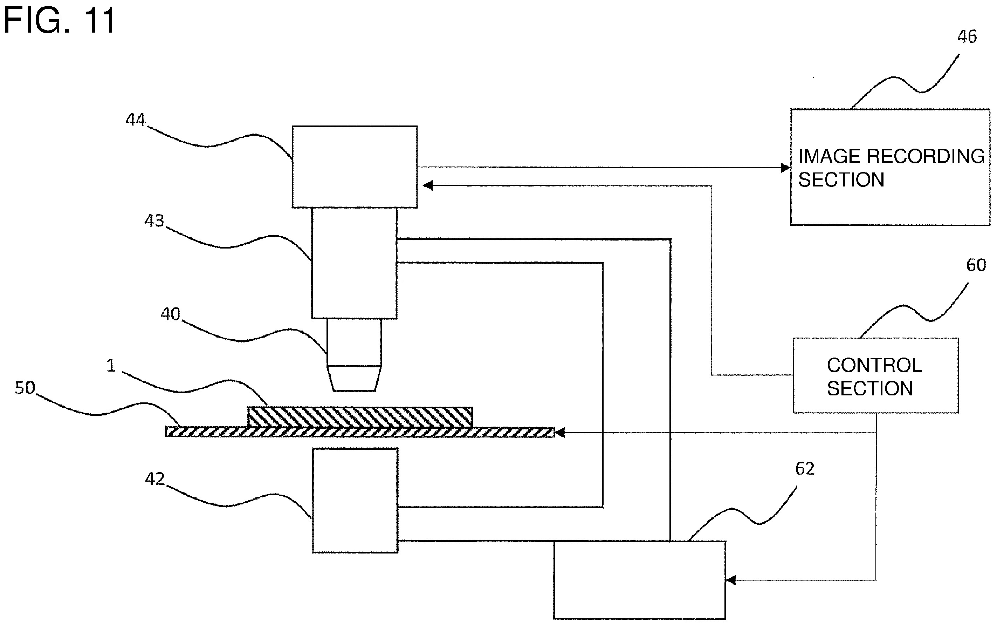

Next, with reference to FIG. 11, a microscope system is explained. FIG. 11 is a schematic configuration diagram of the microscope system. The microscope system has the stage 50, the objective lens 40, an imaging optical system 43, an image capturing section 44, an image recording section 46, the transmission illumination system 42, a control section 60 and a microscope stage 62.

An image observed by the objective lens 40 is captured by the image capturing section 44. The image capturing section 44 is a camera, for example. Image data obtained by image-capturing by the image capturing section 44 is recorded in the image recording section 46.

Each of the image recording section 46 and the control section 60 may be configured by using a computer or a microcontroller having a CPU, a memory, a nonvolatile storage device (SSD, etc.) and a logical circuit such as an FPGA, for example, or may be configured by giving one computer or microcontroller the functions of both the image recording section 46 and the control section 60.

The control section 60 controls image capturing timing of the image capturing section 44. In addition, the control section 60 can control movement of the stage 50 and the microscope stage 62. Here, the slide holder 1 placed on stage 50 may be moved to an image capturing position or an image capturing position may be moved by moving the microscope stage 62 while the stage 50 is fixed. Thereby, images at a plurality of image capturing positions on the glass slide 2 can be captured consecutively.

Note that in order to capture images of a plurality of the glass slides 2 simultaneously, two or more objective lenses 40, imaging optical systems 43 and image capturing sections 44 may be arranged in parallel, and connected with a single image recording section 46 or a plurality of image recording sections 46.

A plurality of the stacked slide holders 1 are stored in a plate stacker (not depicted) in a state where the plurality of glass slides 2 are held by the plurality of slide holders 1. The plate stacker can automatically take out the slide holders 1 one at a time from the plurality of stacked slide holders 1.

A slide holder 1 taken out from the plate stacker is placed on the stage 50.

Note that the slide holders 1 may be placed on the stage 50 one at a time without using the plate stacker.

The slide holders and the stage according to the present invention have been explained in detail thus far, but the present invention is not limited to the embodiment described above. In addition, various improvements or changes may certainly be made within the scope of the present invention as defined in the appended claims.

### Reference Signs List

1: Slide holder
2: Glass slide
10: First longer side portion
12: Second longer side portion
14: First shorter side portion
16: Second shorter side portion
18: Elastic portion
19: Projection
20: Bottom surface
21: Glass slide placement surface
22: Tapered surface
23: Wall portion
24: Pedestal portion
26: Protrusion
28: Claw
30: Recess
32: Rib
40: Objective lens
42: Transmission illumination system
43: Imaging optical system
44: Image capturing section
46: Image recording section
50: Stage
52: Support section
54: Bottom surface
60: Control section
62: Microscope stage
L1: Effective imaging range
L2: Effective imaging range

## Claims

1. A slide holder (1) that can hold a plurality of glass slides (2), the slide holder (1) comprising:
a first longer side portion (10) that has elastic portions (18) that fix the glass slides (2) and has a tapered surface (22) on an inner periphery side of a bottom surface (20);
a second longer side portion (12) that is positioned opposite the first longer side portion (10); and
a first shorter side portion (14) and a second shorter side portion (16) that connect ends of the first longer side portion (10) and the second longer side portion (12), and are positioned opposite to each other;
**characterized in that**,
each of the first longer side portion (10), the second longer side portion (12), the first shorter side portion (14) and the second shorter side portion (16) has:
a pedestal portion (24) that has a downwardly extending wall portion (23) at a bottom surface (20); and
a protrusion (26) that protrudes upward from the pedestal portion (24), and is positioned on an inner periphery side of the wall portion (20).

2. The slide holder (1) according to claim 1, wherein the elastic portions (18) can bias the glass slides (2) in a direction from the first longer side portion (10) to the second longer side portion (12).

3. The slide holder (1) according to claim 1 or 2, wherein
the first longer side portion (10) has a glass slide placement surface (21) on an upper surface, and
the elastic portions (18) are spring structures overhanging from the glass slide placement surface (21).

4. The slide holder (1) according to any one of claims 1 to 3, wherein each of the second longer side portion (12), the first shorter side portion (14) and the second shorter side portion (16) has a tapered surface (22) on an inner periphery side of a bottom surface (20).

5. The slide holder (1) according to any one of claims 1 to 4, wherein an angle formed by the tapered surface (22) and a bottom surface (20) of each of the first longer side portion (10), the second longer side portion (12), the first shorter side portion (14) and the second shorter side portion (16) is equal to or smaller than 60 degrees.

6. The slide holder (1) according to any one of claims 1 to 5, wherein the first longer side portion (10) including the elastic portions (18), the second longer side portion (12), the first shorter side portion (14) and the second shorter side portion (16) are formed integrally.

7. The slide holder (1) according to any one of claims 1 to 6, wherein the first longer side portion (10) including the elastic portions (18), the second longer side portion (12), the first shorter side portion (14) and the second shorter side portion (16) are made of resin.

8. The slide holder (1) according to claim 6 or 7, wherein the first longer side portion (10) including the elastic portions (18), the second longer side portion (12), the first shorter side portion (14) and the second shorter side portion (16) are injection-molded.

9. The slide holder (1) according to any one of claims 1 to 8, wherein a height of the protrusion (26) is taller than a thickness of the glass slides (2).

10. The slide holder (1) according to any one of claims 1 to 9, wherein at least one of the first longer side portion (10), the second longer side portion (12), the first shorter side portion (14) and the second shorter side portion (16) has a recess (30) at the wall portion (23).

## Patentansprüche

1. Objektträgerhalter (1), der mehrere Glasobjektträger (2) aufnehmen kann, wobei der Objektträgerhalter (1) aufweist:
einen ersten längeren Seitenabschnitt (10), der elastische Abschnitte (18) aufweist, die die Glasobjektträger (2) fixieren, und eine verjüngte Fläche (22) an einer Innenumfangsseite einer Bodenfläche (20) aufweist;
einen zweiten längeren Seitenabschnitt (12), der gegenüber dem ersten längeren Seitenabschnitt (10) positioniert ist; und
einen ersten kürzeren Seitenabschnitt (14) und einen zweiten kürzeren Seitenabschnitt (16), die Enden des ersten längeren Seitenabschnitts (10) und
des zweiten längeren Seitenabschnitts (12) verbinden und einander gegenüberliegend positioniert sind;
**dadurch gekennzeichnet, dass**
jeder des ersten längeren Seitenabschnitts (10), des zweiten längeren Seitenabschnitts (12), des ersten kürzeren Seitenabschnitts (14) und des zweiten kürzeren Seitenabschnitts (16) aufweist:
einen Sockelabschnitt (24), der einen sich nach unten erstreckenden Wandabschnitt (23) an einer Bodenfläche (20) aufweist; und
einen Vorsprung (26), der vom Sockelabschnitt (24) nach oben vorsteht und an einer Innenumfangsseite des Wandabschnitts (23) angeordnet ist.

2. Objektträgerhalter (1) nach Anspruch 1, wobei die elastischen Abschnitte (18) die Glasobjektträger (2) in einer Richtung vom ersten längeren Seitenabschnitt (10) zum zweiten längeren Seitenabschnitt (12) vorspannen können.

3. Objektträgerhalter (1) nach Anspruch 1 oder 2, wobei
der erste längere Seitenabschnitt (10) eine Glasobjektträger-Platzierungsfläche (21) auf einer oberen Fläche aufweist und
die elastischen Abschnitte (18) Federstrukturen sind, die von der Glasobjektträger-Platzierungsfläche (21) überragen.

4. Objektträgerhalter (1) nach einem der Ansprüche 1 bis 3, wobei der zweite längere Seitenabschnitt (12), der erste kürzere Seitenabschnitt (14) und der zweite kürzere Seitenabschnitt (16) jeweils eine verjüngte Fläche (22) an einer Innenumfangsseite einer Bodenfläche (20) aufweisen.

5. Objektträgerhalter (1) nach einem der Ansprüche 1 bis 4, wobei ein Winkel, der durch die verjüngte Fläche (22) und eine Bodenfläche (20) jedes des ersten längeren Seitenabschnitts (10), des zweiten längeren Seitenabschnitts (12), des ersten kürzeren Seitenabschnitts (14) und des zweiten kürzeren Seitenabschnitts (16) gebildet wird, gleich oder kleiner als 60 Grad ist.

6. Objektträgerhalter (1) gemäß einem der Ansprüche 1 bis 5, wobei der erste längere Seitenabschnitt (10) einschließlich der elastischen Abschnitte (18), der zweite längere Seitenabschnitt (12), der erste kürzere Seitenabschnitt (14) und der zweite kürzere Seitenabschnitt (16) integral ausgebildet sind.

7. Objektträgerhalter (1) nach einem der Ansprüche 1 bis 6, wobei der erste längere Seitenabschnitt (10) einschließlich der elastischen Abschnitte (18), der zweite längere Seitenabschnitt (12), der erste kürzere Seitenabschnitt (14) und der zweite kürzere Seitenabschnitt (16) aus Harz bestehen.

8. Objektträgerhalter (1) nach Anspruch 6 oder 7, wobei der erste längere Seitenabschnitt (10) einschließlich der elastischen Abschnitte (18), der zweite längere Seitenabschnitt (12), der erste kürzere Seitenabschnitt (14) und der zweite kürzere Seitenabschnitt (16) spritzgegossen sind.

9. Objektträgerhalter (1) nach einem der Ansprüche 1 bis 8, wobei die Höhe des Vorsprungs (26) größer ist als die Dicke der Glasobjektträger (2).

10. Objektträgerhalter (1) nach einem der Ansprüche 1 bis 9, wobei mindestens einer des ersten längeren Seitenabschnitts (10), des zweiten längeren Seitenabschnitts (12), des ersten kürzeren Seitenabschnitts (14) und des zweiten kürzeren Seitenabschnitts (16) eine Aussparung (30) am Wandabschnitt (23) aufweist.

## Revendications

1. Porte-objet (1) capable de maintenir une pluralité de lames de verre (2), le porte-objet (1) comprenant :
une première partie latérale longue (10) comportant des parties élastiques (18) destinées à fixer les lames de verre (2) et présentant une surface conique (22) sur le côté périphérique intérieur d'une surface inférieure (20) ;
une deuxième partie latérale longue (12) positionnée à l'opposé de la première partie latérale longue (10) ; et
une première partie latérale courte (14) et une deuxième partie latérale courte (16) qui relient les extrémités de la première partie latérale longue (10) et de la deuxième partie latérale longue (12), et qui sont situées en vis-à-vis l'une de l'autre ;
**caractérisé en ce que**,
chacune des première partie latérale longue (10), deuxième partie latérale longue (12), première partie latérale courte (14) et deuxième partie latérale courte (16) comporte :
une partie formant socle (24) comportant une partie de paroi (23) s'étendant vers le bas au niveau d'une surface inférieure (20) ; et
une saillie (26) qui fait saillie vers le haut à partir de la partie formant socle (24) et qui est positionnée sur le côté périphérique intérieur de la partie de paroi (20).

2. Porte-objet (1) selon la revendication 1, dans lequel les parties élastiques (18) peuvent exercer une force de rappel sur les lames de verre (2) dans une direction allant de la première partie latérale longue (10) vers la deuxième partie latérale longue (12).

3. Porte-objet (1) selon la revendication 1 ou 2, dans lequel
la première partie latérale longue (10) comporte une surface de placement des lames de verre (21) sur une surface supérieure, et
les parties élastiques (18) sont des structures à ressort en saillie par rapport à la surface de placement des lames de verre (21).

4. Porte-objet (1) selon l'une quelconque des revendications 1 à 3, dans lequel chacune de la deuxième partie latérale longue (12), de la première partie latérale courte (14) et de la deuxième partie latérale courte (16) comporte une surface conique (22) sur un côté de la périphérie intérieure d'une surface inférieure (20).

5. Porte-objet (1) selon l'une quelconque des revendications 1 à 4, dans lequel l'angle formé par la surface conique (22) et une surface inférieure (20) de chacune de la première partie latérale longue (10), de la deuxième partie latérale longue (12), de la première partie latérale courte (14) et de la deuxième partie latérale courte (16) est égal ou inférieur à 60 degrés.

6. Porte-objet (1) selon l'une quelconque des revendications 1 à 5, dans lequel la première partie latérale longue (10) comprenant les parties élastiques (18), la deuxième partie latérale longue (12), la première partie latérale courte (14) et la deuxième partie latérale courte (16) sont formées d'un seul tenant.

7. Porte-objet (1) selon l'une quelconque des revendications 1 à 6, dans lequel la première partie latérale longue (10) comprenant les parties élastiques (18), la deuxième partie latérale longue (12), la première partie latérale courte (14) et la deuxième partie latérale courte (16) sont réalisées en résine.

8. Porte-objet (1) selon la revendication 6 ou 7, dans lequel la première partie latérale longue (10) comprenant les parties élastiques (18), la deuxième partie latérale longue (12), la première partie latérale courte (14) et la deuxième partie latérale courte (16) sont moulées par injection.

9. Porte-objet (1) selon l'une quelconque des revendications 1 à 8, dans lequel la hauteur de la saillie (26) est supérieure à l'épaisseur des lames de verre (2).

10. Porte-objet (1) selon l'une quelconque des revendications 1 à 9, dans lequel au moins une partie parmi la première partie latérale longue (10), la deuxième partie latérale longue (12), la première partie latérale courte (14) et la deuxième partie latérale courte (16) comporte un évidement (30) au niveau de la partie de paroi (23).
